# EUROPÄISCHE PATENTSCHRIFT

(11) **EP 3 645 358 B1**
(45) Veröffentlichungstag und Bekanntmachung des Hinweises auf die Patenterteilung: **11.08.2021**
(21) Anmeldenummer: 18732675.6
(22) Anmeldetag: 01.06.2018
(51) Int. Cl.: B60T 17/08, F16D 59/02

(54) **FEDERSPEICHERBREMSZYLINDER MIT EINER NOTLÖSEEINRICHTUNG**
SPRING STORAGE BRAKE CYLINDER HAVING AN EMERGENCY RELEASE DEVICE
CYLINDRE DE FREIN À RESSORT COMPRENANT UN DISPOSITIF DE DESSERRAGE D'URGENCE

(30) Priorität: 30.06.2017 DE 102017114664
(43) Veröffentlichungstag der Anmeldung: 06.05.2020
(73) Patentinhaber: KNORR-BREMSE Systeme für Schienenfahrzeuge GmbH, 80809 München (DE)
(72) Erfinder: KRAUS, Harry-Werner, 81825 München (DE)
(86) Internationale Anmeldenummer: PCT/EP2018/064521
(87) Internationale Veröffentlichungsnummer: WO 2019/001898

(56) Entgegenhaltungen:
- DE-A1- 10 054 149
- DE-A1-102007 063 699
- DE-A1-102011 119 998
- GB-A- 1 280 725
- US-A1- 2010 051 396

## Beschreibung

Die Erfindung betrifft einen Federspeicherbremszylinder mit einer Notlöseeinrichtung nach dem Oberbegriff des Anspruchs 1.

Um das Wegrollen von abgestellten Schienenfahrzeugen unter allen Umständen zu verhindern, muss die Feststellbremse eine entsprechend hohe Bremskraft auch ohne externe Energieversorgung sicherstellen. Es werden für diese Aufgabe häufig derartige Federspeicherbremszylinder eingesetzt, welche die für die Feststellbremse erforderliche Zuspannkraft der Bremsbeläge mittels Federkraft aufbringen. Die Federn werden durch einen Zylinder vorgespannt. Entweicht der Druck aus dem Zylinder, so stützt sich die Federkraft an den Hebeln der Bremszange ab und erzeugt so die Anpresskraft auf die Bremsbeläge.

Muss ein derart abgestelltes Schienenfahrzeug abgeschleppt werden, so steht oftmals keine Druckluftversorgung für dieses Fahrzeug zur Verfügung, mit welcher der Federspeicher des Federspeicherbremszylinders sicher pneumatisch gelöst werden kann. Für diesen Fall muss der Federspeicher mit einer entsprechenden mechanischen Löseeinrichtung ausgestattet sein (Notlöse- oder Hilfslöseeinrichtung), durch welche die Feststellbremse von Hand, d.h. ohne Nutzung von Fremdenergie gelöst werden kann. Die mechanische Löseeinrichtung wird auch dazu genutzt, um beim Bremsbelagwechsel die Zange sicher kraftfrei zu machen. Ein Wechseln der Bremsbeläge bei pneumatisch gelöstem Federspeicher ist nicht zulässig, da ein ungewolltes Anlegen der Bremse durch Druckabfall ein zu hohes Sicherheitsrisiko für das Servicepersonal darstellt.

Diese Notlöseeinrichtung muss so ausgebildet sein, dass nach einem mechanischen Lösen des Federspeichers die volle Bremsfunktion wieder zur Verfügung steht, sobald er einmal mit dem Mindest- Lösedruck beaufschlagt wurde (automatische Wiederbereitschaft).

Bei den meisten heute gefertigten Federspeicherzylindern hat sich ein Muttern-Spindel- System mit nicht selbsthemmendem Gewinde im Kraftfluss des Federspeichers als wesentliches Element der Notlöseeinrichtung bewährt. Dieses hat die Eigenschaft, dass eine Axialkraft nur übertragen werden kann, wenn das dabei auf beide Gewindeteile wirkende Moment abgestützt wird. Hebt man die Momenten-Abstützung auf, so verschrauben sich Mutter und Spindel relativ zueinander bis keine Axialkraft mehr wirkt.

Ein Beispiel für einen Federspeicherbremszylinder mit einer Notlöseeinrichtung beschreibt das Dokument DE 100 54 149 A1. Ein Federspeicherbremszylinder wird beschrieben, bei dem die Momenten-Abstützung der Spindel über einen formschlüssigen Eingriff eines Riegels an einem Zahnradelement an einer einzigen radial gerichteten Sperrflanke erfolgt. Das Zahnradelement kann ortsfest endseitig an der Spindel als separates Bauteil befestigt sein. Durch die Vermeidung einer Vielzahl von Zähnen am Zahngesperre wird eine Abnutzung der Verzahnung durch eine ungünstige Eingriffssituation des Riegels während der Bewegung des drehbaren Gewindespindeltriebs vermieden.

Hierzu illustriert DE 10 2007 063 699 B4 einen Kombizylinder mit klinkenbetätigter Notlöseeinrichtung für die Feststellbremse.

Als Alternative zu dem, als separates Bauteil ausgeführten, Zahnradelement kann auch die Spindel eine entsprechende Sperrflanke aufweisen. Bei den bisher bekannten Ausführungen ist eine derartige Verzahnung bzw. Sperrflanke jedoch immer in einem radial oder axial zum Gewindeprofil angrenzenden Bereich ausgeführt. Dies wird als nachteilig angesehen, da diese Ausführungsvariante wiederum mit einem größeren Einbauraum für die Spindel verbunden ist.

Daher besteht die Aufgabe der Erfindung darin, einen verbesserten Federspeicherbremszylinder mit einer verbesserten Notlöseeinrichtung bereitzustellen.

Die Aufgabe wird durch einen Federspeicherbremszylinder mit einer Notlöseeinrichtung mit den Merkmalen des Anspruchs 1 gelöst.

Die Notlöseeinrichtung basiert auf einem Spindel-Mutter-System. Auf der Spindel befindet sich eine Verzahnung, in die eine Klinke eingreift und dadurch das Drehmoment der Spindel abstützt. Die einteilige Spindel ist grundsätzlich als mehrgängiges Gewinde ausgeführt, wobei auf die Ausformung mindestens eines Gewindeganges verzichtet wird. Dadurch ergibt sich mindestens ein breiter Gewindezug. In Verbindung mit einer zusätzlichen Aussparung entsteht eine Abstützfläche welche als Sperrflanke für die Drehmomentabstützung an der Klinke dient.

Ein erfindungsgemäßer Federspeicherbremszylinder mit einer Notlöseeinrichtung, insbesondere für Schienenfahrzeuge, und mit einem innerhalb eines Gehäuses axial bewegbaren Federspeicherkolben, der einerseits durch eine Speicherfeder zum Betätigen der Bremse bei Druckabfall und andererseits durch eine druckmittelbeaufschlagbare Federspeicherdruckkammer zum Lösen dieser Federspeicherbremse bewegbar ist, sowie einem im Kraftfluss zwischen dem Federspeicherkolben und einer abtriebsseitigen Kolbenstange angeordneten normalerweise gesperrten nichtselbsthemmenden Gewindespindeltrieb mit einer Achse, der über ein der Notlöseeinrichtung zugeordnetes Sperrelement manuell entsperrbar ist, um die Federspeicherbremse ohne Druckmittel zu lösen, wobei dem relativ zum Gehäuse drehbaren Teil des Gewindespindeltriebes eine außenradiale Gleitfläche für das hieran in Anlage gehaltene Sperrelement zugeordnet ist, an welcher nur eine formschlüssig mit dem Sperrelement zusammenwirkende Sperrflanke zum Sperren der Notlöseeinrichtung ausgebildet ist, wobei die Steigung des Gewindespindeltriebes derart bemessen ist, dass der drehbare Teil des Gewindespindeltriebes über seinen maximalen axialen Verstellhub weniger als eine ganze Umdrehung ausführt, wobei der relativ zu dem Gehäuse drehbare Teil des Gewindespindeltriebs als eine gemeinsam mit einer Kolbenstange axial in Richtung der Achse verschiebbare Spindel ausgebildet ist, die drehbar um die Kolbenstange und die Achse gelagert ist, und die mit einer ortsfest zu dem Federspeicherkolben angeordneten Mutter als drehstarrer Teil des Gewindespindeltriebs zusammenwirkt. Die Sperrflanke ist in ein Außengewinde der Spindel eingeformt.

Der Vorteil dieser Ausführung liegt insbesondere darin, dass die Spindel (mit Sperrflanke) auf sehr kleinem Bauraum realisiert werden kann ohne die Gewindelänge zu reduzieren. Weitere Vorteile liegen im geringen Montageaufwand sowie in der einfachen Fertigung.

Weitere vorteilhafte Ausbildungen der Erfindung sind in den Unteransprüchen angegeben.

In einer weiteren Ausführung ist die Sperrflanke in das Außengewinde der Spindel in einem zu einem Betriebsbremskolben weisenden Endbereich der Spindel eingeformt. Damit ist eine besonders vorteilhafte raumsparende Ausführung ermöglicht.

Wenn die Spindel mit einem mehrgängigen Außengewinde versehen ist, wobei in dem zu dem Betriebsbremskolben weisenden Endbereich der Spindel, in welchem die Sperrflanke eingeformt ist, auf die Ausformung mindestens eines Gewindeganges des mehrgängigen Außengewindes bis zu dem Ende der Spindel verzichtet ist, kann die Sperrflanke in die Spindel eingeformt werden und einstückig mit dieser hergestellt werden.

In einer weiteren Ausführung ist in dem Bereich des nicht ausgeformten Gewindeganges des mehrgängigen Außengewindes ein breiter Gewindezug, welcher durch eine Aussparung in zwei Gewindezugabschnitte getrennt ist, gebildet. Dies ergibt den Vorteil, dass keine Zusatzteile erforderlich werden.

In einer noch weiteren Ausführung erzeugt die Aussparung an dem Gewindezugabschnitt die Sperrflanke mit einer Abstützfläche. Dies ist vorteilhaft platzsparend und einfach in der Herstellung.

In einer weiteren Ausführung ist das Sperrelement der Notlöseeinrichtung als Winkelhebel ausgebildet und um eine Schwenkachse aus einer gesperrten Stellung, in welcher das Sperrelement mit der Sperrflanke in Eingriff steht, in eine gelöste Stellung, in welcher das Sperrelement außer Eingriff mit der Sperrflanke steht, und zurück um eine Schwenkachse verschwenkbar.

In einer Ausführung weist das Sperrelement der Notlöseeinrichtung einen Klinkenarm mit einer Kontaktfläche, einen Betätigungsarm mit einem Betätigungsabschnitt, einen Mittelabschnitt mit der Schwenkachse auf, wobei die Kontaktfläche des Klinkenarms in der gesperrten Stellung der Notlöseeinrichtung mit der Sperrflanke in Eingriff steht. Das Sperrelement weist somit eine kompakte und raumsparende Form auf.

Ein besonders vorteilhafter Aufbau ergibt sich, wenn die Schwenkachse, um welche das Sperrelement verschwenkbar ist, parallel zu der Achse angeordnet ist.

Die Aussparung weist einen weiteren Vorteil in einer anderen Ausführung auf, wenn der Klinkenarm in der gesperrten Stellung zumindest teilweise in der Aussparung der Spindel aufliegt, da auf diese Weise Einbauraum gespart werden kann.

Die Gewindezugabschnitte bilden außerdem vorteilhaft die außenradiale Gleitfläche für den Klinkenarm des Sperrelementes.

Das Sperrelement ist mittels Zusammenwirkung eines Betätigungsstößels mit dem Betätigungsarm in jeder Position des Federspeicherkolbens aus der gesperrten Stellung in die gelöste Stellung verschwenkbar. Dies ist vorteilhaft einfach ausführbar und weist einen kompakten Aufbau auf.

Ein Ausführungsbeispiel der Erfindung wird nachfolgend anhand der beigefügten Zeichnungen beschrieben.

Es zeigen:
- Figur 1: einen schematischen Längsschnitt durch einen Federspeicherbremszylinder mit einer Notlöseeinrichtung nach dem Stand der Technik;
- Figur 2: eine schematische Perspektivansicht einer Spindel eines erfindungsgemäßen Federspeicherbremszylinders;
- Figur 3: eine schematische Perspektivansicht eines Spindel-MutterSystems des erfindungsgemäßen Federspeicherbremszylinders mit einer erfindungsgemäßen Notlöseeinrichtung; und
- Figur 4: eine schematische Teilschnittansicht des erfindungsgemäßen Federspeicherbremszylinders mit der erfindungsgemäßen Notlöseeinrichtung.

Koordinaten x, y, z dienen zur Orientierung in den Figuren.

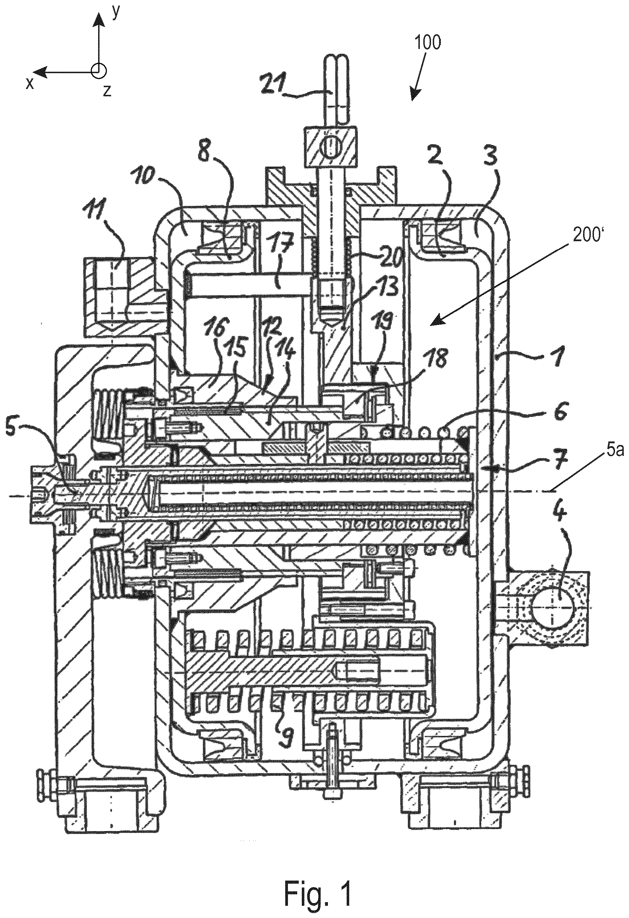

**Figur 1** zeigt einen Längsschnitt durch einen Federspeicherbremszylinder 100' mit einer Notlöseeinrichtung 200' nach dem Stand der Technik.

Da die Erfindung von dem Federspeicherbremszylinder 100' mit der Notlöseeinrichtung 200' nach dem Stand der Technik gemäß Figur 1 ausgeht, wird für ihr Verständnis und ihre Funktionsweise zunächst dieser Stand der Technik aus dem Dokument DE 100 54 149 A1 im Zusammenhang mit Figur 1 ausführlich beschrieben.

Der Federspeicherbremszylinder 100' besteht im wesentlichen aus einem zweigeteilten, im wesentlichen zylinderförmigen Gehäuse 1, das innerhalb einer ersten Hälfte einen axial verschiebbaren Betriebsbremskolben 2 enthält, der über eine zugeordnete Betriebsbremsdruckkammer 3 durch den am Gehäuse 1 angeordneten Anschluss 4 mit Druckmittel, z.B. Druckluft, beaufschlagbar ist, um über eine aus den Gehäuse 1 abgedichtet herausgeführte und koaxial am Betriebsbremskolben 2 befestigte Kolbenstange 5 eine Bremskraft auf ein (hier nicht weiter dargestelltes) Bremsgestänge eines Schienenfahrzeuges zu übertragen.

Die Kolbenstange 5 weist eine Achse 5a, welche in x-Richtung verläuft, auf. Der Betriebsbremskolben 2 und die Kolbenstange 5 sind koaxial zu dieser Achse 5a angeordnet.

Die Rückstellung des Betriebsbremskolbens 2 erfolgt im entlüfteten Zustand der Betriebsbremsdruckkammer 3 im Wesentlichen über die Kraftwirkung einer zwischen dem Gehäuse 1 und dem Betriebsbremskolben 2 wirkenden Rückholfeder 6. Die Kolbenstange 5 ist ferner mit einer mechanischen Nachstelleinrichtung 7 zum Ausgleich eines durch Abnutzung der Bremsbeläge entstehenden Verschleißspieles ausgestattet.

Neben der vorstehend beschriebenen Betriebsbremse mit dem Betriebsbremskolben 2 ist im Federspeicherbremszylinder 100' auch eine Federspeicherbremse integriert, wozu innerhalb der zweiten Hälfte des Gehäuses 1 ein in Richtung der und koaxial zu der Achse 5a axial bewegbarer Federspeicherkolben 8 angeordnet ist. Der Federspeicherkolben 8 ist einerseits durch mehrere Speicherfedern 9 bewegbar, die in gleichen radialen Abständen und in untereinander äquidistanten Abständen bezüglich des Federspeicherkolbens 8 angeordnet sind und auf der anderen Seite mit Teilen des Gehäuses 1 zusammenwirken, um die Bremse bei einem signifikanten Druckabfall automatisch zu betätigen. Auf der anderen Seite des Federspeicherkolbens 8 befindet sich eine Federspeicherdruckkammer 10. Die Federspeicherdruckkammer 10 verfügt über einen zugeordneten Anschluss 11 und ist zum Lösen der Federspeicherbremse, also zum Rückstellen des Federspeicherkolbens 8 entgegen der von der Speicherfeder ausgeübten Kraft, mit Druckmittel beaufschlagbar.

Im Kraftfluss zwischen dem Federspeicherkolben 8 und der abtriebsseitigen Kolbenstange 5 ist ein während des normalen Bremsbetriebes gesperrter, nichtselbsthemmender Gewindespindeltrieb 12 angeordnet, der über einen der Notlöseeinrichtung zugeordneten Riegel 13 manuell entsperrbar ist, um die Federspeicherbremse ohne Druckmittel lösen zu können. Der Gewindespindeltrieb 12 ist koaxial zu der Achse 5a angeordnet.

Der relativ zum Gehäuse 1 drehbare Teil des Gewindespindeltriebes 12 ist als eine gemeinsam mit der Kolbenstange 5 axial in x-Richtung verschiebbare Spindel 14 ausgebildet, die drehbar um die Kolbenstange 5 und somit um die Achse 5a gelagert ist. Die Spindel 14 ist über eine außenradiale Kunststoffbuchse 15 verschiebbar und drehbar im Gehäuse 1 geführt. Ein nicht weiter beschriebener Druckring bildet eine Lagerung der Spindel 14 auf der zum Betriebsbremskolben 2 weisenden Seite und ist mit dem Gehäuse 1 fest verbunden.

Mit der Spindel 14 wirkt eine ortsfest zum Federspeicherkolben 8 angeordneten Mutter 16 als drehstarrer Teil des Gewindespindeltriebes 12 zusammen. Eine Drehbewegung des Federspeicherkolbens 8 mit Mutter 16 wird dabei durch eine Drehmomentsperre 17 verhindert, die mit Teilen des Gehäuses 1 nach Art eines mechanischen Anschlages zusammenwirkt.

Ein Zahnradelement 18 ist zum Sperren und Entsperren des Gewindespindeltriebes 12 vorgesehen und an der Spindel 14 an dem Ende, welches zum Betriebsbremskolben 2 weist, ortsfest aber demontierbar befestigt. Das Zahnradelement 18 weist eine außenradiale Gleitfläche 19 mit einer Sperrflanke für den hiermit zur Bildung der Notlöseeinrichtung 200' zusammenwirkenden Riegel 13 auf. Zwischen dem Riegel 13 und dem Gehäuse 1 ist eine nach Art einer Druckfeder ausgebildete Feder 20 angeordnet, um den Riegel 13 in stetiger Anlage an der Gleitfläche 19 des Zahnradelements 18 zu halten. Über einen außenliegenden Griff 21 kann der Riegel 13 von der Gleitfläche 19 entgegen der Kraft der Feder 21 manuell abgehoben werden. Der Riegel 13 ist in einer y-Richtung verstellbar.

In der in Figur 1 gezeigten Stellung befindet sich der Federspeicherbremszylinder 100' im notgelösten Zustand. Hierbei ist die Federspeicherbremse durch Ziehen am Riegel 13 in positiver y-Richtung, was den formschlüssigen Eingriff am Zahnradelement 18 aufhebt, ohne Druckmittel gelöst worden. Durch das damit erfolgte Entsperren des Gewindespindeltriebes 12 ist die Spindel 14 frei drehbar, so dass aufgrund von Rückstellkräften, die u. a. von der Rückholfeder 6 ausgehen, eine axiale Einfahrbewegung der mit der Spindel 14 verbundenen Kolbenstange 5 in negativer x-Richtung zum Lösen der Bremse bewirkt wird. Die Steigung des Gewindespindeltriebes ist dabei derart bemessen, dass die Spindel 14 mit Zahnradelement 18 über ihren maximalen axialen Verstellhub in x-Richtung weniger als eine ganze Umdrehung ausführt.

Der formschlüssige Eingriff des Riegels 13 am Zahnradelement 18 erfolgt an einer einzigen hieran radialgerichtet ausgebildeten Sperrflanke 22, so dass der Gewindespindeltrieb 12 gesperrt ist. Die übrige Umfangsfläche des Zahnradelements 18 ist hier als gleichmäßige Kurvenbahn 19 ausgebildet. Im gesperrten Zustand befindet sich das Zahnradelement 18 in einer axialen Endstellung, in der ein formschlüssiges Zusammenwirken mit dem Riegel 13 noch gewährleistet ist. Es kann in diesem gesperrten Zustand ein normaler Bremsbetrieb erfolgen, wobei eine Axialverschiebung in x-Richtung zwischen dem ortsfesten Riegel 13 und dem axial bewegbaren Zahnradelement 18 bei einer Hubbewegung der Kolbenstange 5 in x-Richtung auftritt.

In dem notgelösten Zustand ist der formschlüssige Eingriff zwischen Riegel 13 und Zahnradelement 18 aufgehoben. Der Gewindespindeltrieb 12 ist hierbei entsperrt und der Riegel 13 kann frei über die Kurvenbahn 19 gleiten. Nach dem Entsperren erfolgt eine axiale Relativbewegung zwischen Riegel 13 und Zahnradelement 18, ausgehend von der oben genannten axialen Endstellung eine davon unterschiedliche Endstellung infolge der axialen Einfahrbewegung der Kolbenstange 5 in x-Richtung samt Spindel 14. Zur Herstellung der Wiederbereitschaft wird bei wieder vorhandenem Druckmittel automatisch ein Lösehub des Federspeicherkolbens 8 unter Zusammendrücken der Speicherfedern 9 in negativer x-Richtung ausgeführt, wobei ein Rückdrehen der entsperrten Spindel 14 mit dem daran befestigten Zahnrad 19 erfolgt, bis der Riegel 13 wieder in formschlüssigen Eingriff mit der Sperrflanke 22 gelangt und somit der gesperrte Zustand des Gewindespindeltriebes 12 wieder hergestellt ist. Ein normaler Bremsbetrieb ist nun wieder möglich.

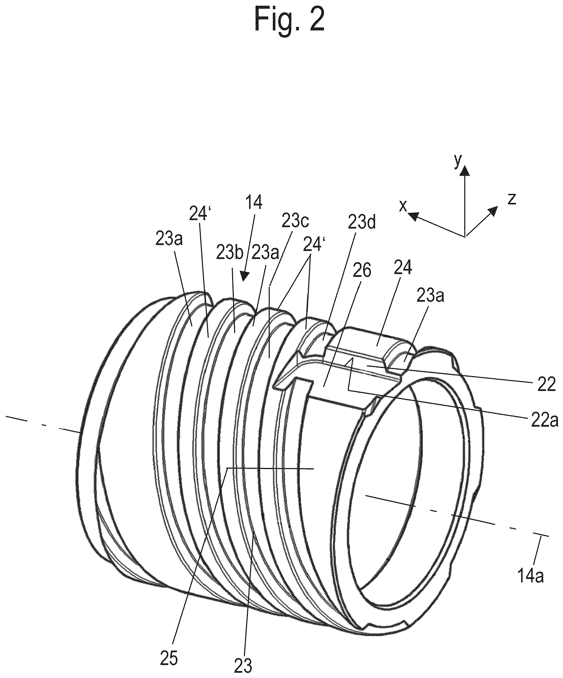

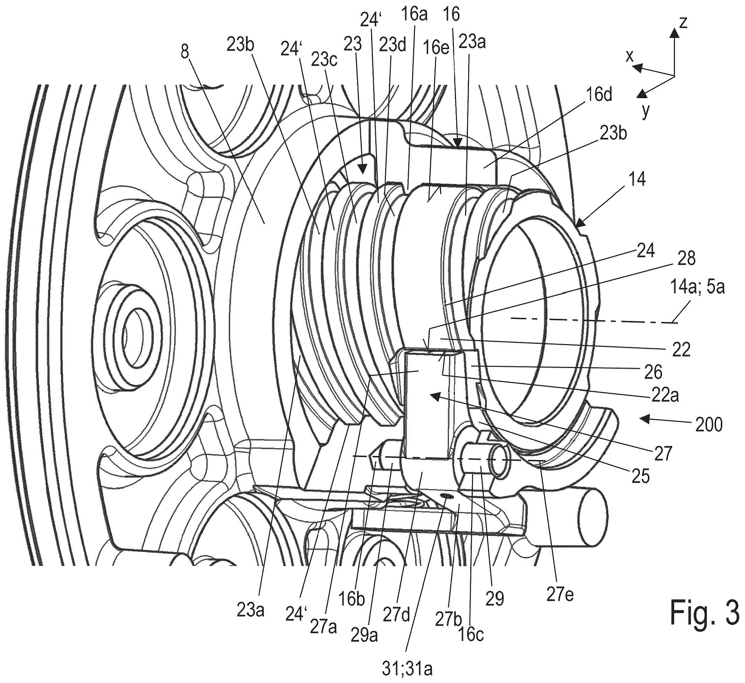

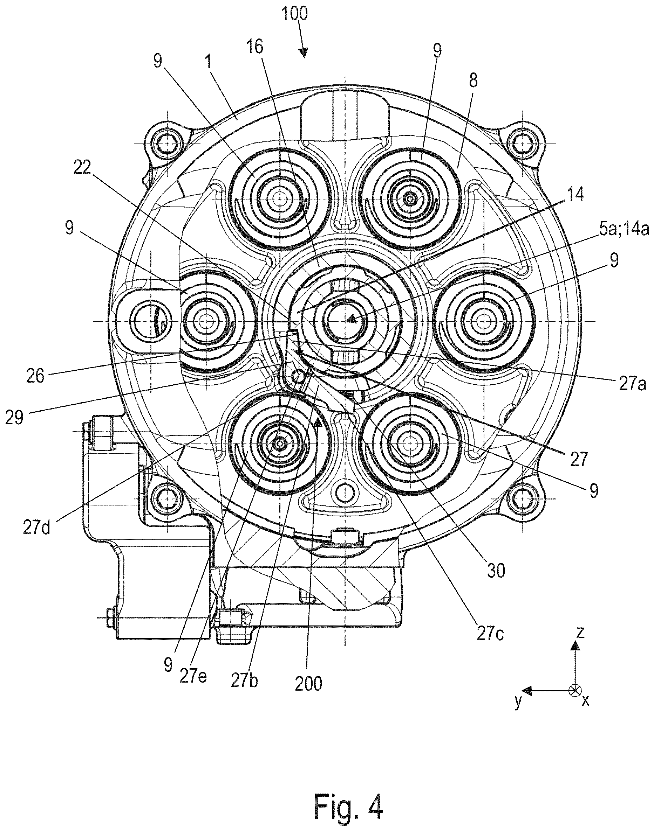

In **Figur 2** ist eine schematische Perspektivansicht einer Spindel 14 eines erfindungsgemäßen Federspeicherbremszylinders 100 dargestellt. **Figur 3** zeigt eine schematische Perspektivansicht eines Spindel-Mutter-Systems des erfindungsgemäßen Federspeicherbremszylinders 100 mit einer erfindungsgemäßen Notlöseeinrichtung 200. **Figur 4** stellt eine schematische Teilschnittansicht des erfindungsgemäßen Federspeicherbremszylinders 100 mit der erfindungsgemäßen Notlöseeinrichtung 200 dar.

Die erfindungsgemäße Notlöseeinrichtung 200 basiert wie oben beschrieben auf einem Spindel-Mutter-System (Figur 3). Die Spindel 14 weist eine Art Verzahnung auf, in welche ein Sperrelement 27 (Figur 3 und 4) eingreift und auf diese Weise ein Drehmoment der Spindel 14 um ihre Spindelachse 14a gegenüber dem ortsfesten Gehäuse 1 abstützt.

Die Spindel 14 ist hier einteilig als eine Hohlspindel ausgeführt und mit einem mehrgängigen Außengewinde 23 versehen. Das mehrgängige Außengewinde 23 ist nicht selbsthemmend und ursprünglich ein fünfgängiges Gewinde. Dabei ist einer der fünf Gewindegänge nicht eingeformt. Dadurch weist das mehrgängige Außengewinde 23 hier nur vier Gewindegänge 23a, 23b, 23c und 23d mit drei schmalen Gewindezügen 24' und einem breiten Gewindezug auf, welche jeweils zwischen den Gewindegängen 23a bis 23d' verlaufen.

An einem zum Betriebsbremskolben 2 weisenden Endbereich der Spindel 14, welches in Figur 2 auf der rechten Seite angeordnet ist, ist auf die Ausformung eines Gewindeganges des ursprünglich 5-gängigen Gewindes über die gesamte Länge der Spindel 14 verzichtet. Es ist auch denkbar, auf die Ausformung eines Gewindeganges über den letzten Umlauf zu verzichten. Vier Gewindegänge 23a bis 23d verlaufen über die gesamte Länge der Spindel 14. Dadurch ergibt sich mindestens ein breiter Gewindezug, Dieser breite Gewindezug ist durch eine Aussparung 26 in zwei Gewindezugabschnitte 24, 25 getrennt.

Der breite Gewindezug weist somit die zwei Gewindezugabschnitte 24, 25 auf.

Mit anderen Worten, das in Figur 2 dargestellte viergängige Gewinde mit den vier Gewindegängen 23a, 23b, 23c und 23d sowie den drei schmalen Gewindezügen 24' und dem breiten Gewindezug ist aus einem gleichmäßigen fünfgängigen Gewinde durch Weglassen eines, nämlich des fünften, Gewindeganges entstanden. Das auf diese Weise entstandene viergängige Gewinde besitzt also die drei schmalen Gewindezüge 24' und den breiten Gewindezug. Bei der im gezeigten Beispiel ausgeführten Spindel 14 ist eine Gewindelänge nur geringfügig größer als die Steigung. D.h., es ist nur eine "Umdrehung" der Gewindegänge 23a, 23b, 23c, 23d zu sehen.

Die Aussparung 26 liegt in einer x-z-Ebene, welche sich in positiver x-Richtung von dem zum Betriebsbremskolben 2 weisenden Ende der Spindel 14 über den angrenzenden zweiten Gewindegang 23b' etwa bis in die Mitte der nächsten Gewindeflanke 23a hinein erstreckt. Dabei bildet die Aussparung 26 an dem Gewindezugabschnitt 24 eine Fläche. Diese Fläche verläuft in einer x-y-Ebene radial zu der Spindelachse 14a und bildet eine Sperrflanke 22 mit einer Abstützfläche 22a für das Sperrelement 27. Die Abstützfläche 22a dient in Zusammenwirkung mit dem Sperrelement 27 als eine Drehmomentabstützung der Spindel 14. In diesem Beispiel verläuft die Stützfläche 22a der Sperrflanke 22 rechtwinklig zu der Aussparung 26. Selbstverständlich können auch andere Winkel verwendet werden.

Mit anderen Worten, die Sperrflanke 22 mit der Abstützfläche 22a ist in das Außengewinde 23 der Spindel 14 eingeformt. In diesem Beispiel ist diese Einformung als Sperrflanke 22 mit der Abstützfläche 22a in den Endbereich der Spindel 14 eingeformt.

In der Teilschnittansicht der **Figur 3** ist die Spindel 14 im eingebauten Zustand mit einer vergrößerten Ansicht der Notlöseeinrichtung 200 dargestellt.

Die Spindel 14 ist mit ihrem Außengewinde 23 in ein Innengewinde 16a der Mutter 16 eingeschraubt. Das zum Betriebsbremskolben 2 weisende Ende der Spindel 14 ist in der Figur 3 rechts angeordnet. Der zugehörige Endbereich der Spindel 14 mit den Gewindezugabschnitten 24, 25, von denen der Gewindezugabschnitt 24 hier deutlich erkennbar ist, ist innerhalb einer umlaufenden Innenwand 16e eines Nabenabschnitts 16d der Mutter 16 angeordnet. Der Nabenabschnitt 16d der Mutter 16 ist an dem Abschnitt der Mutter 16, welcher mit dem Innengewinde 16a versehen ist, angebracht. Die umlaufende Innenwand 16e des Nabenabschnitts 16d weist kein Innengewinde auf und kann so die Gewindezugabschnitte 24, 25 der Spindel 14 aufnehmen.

Die Notlöseeinrichtung 200 umfasst das Sperrelement 27, mindestens eine Feder 30 und eine Betätigungseinheit des Sperrelementes 27.

Das Sperrelement 27 ist als eine Art Winkelhebel und klinkenförmig ausgebildet. Es weist einen Klinkenarm 27a, einen Betätigungsarm 27b mit einem Betätigungsabschnitt 27c, einen Mittelabschnitt 27d und eine Schwenkachse 27e auf.

Der Klinkenarm 27a besitzt ein freies Ende mit einer Kontaktfläche 28. Die Kontaktfläche 28 wirkt mit der Abstützfläche 22a der Sperrflanke 22 des Gewindezugabschnitts 24 der Spindel zusammen. Dies wird unten noch näher erläutert.

Das andere Ende des Klinkenarms 27a ist mit dem Mittelabschnitt 27d fest verbunden, welcher eine zylinderförmige Gestalt mit der Schwenkachse 27e bildet. Die Schwenkachse 27e verläuft parallel zu der Spindelachse 14a.

Auch der Betätigungsarm 27b ist an dem Mittelabschnitt 27d mit einem Ende fest angebracht. Dabei sind der Klinkenarm 27a und der Betätigungsarm 27b um einen Winkel, in diesem Ausführungsbeispiel etwa 125°, um die Schwenkachse 27e gegeneinander verschwenkt angeordnet. Das andere freie Ende des Betätigungsarms 27b ist zur Zusammenwirkung mit einem nicht dargestellten, aber leicht vorstellbaren Betätigungsstößel ausgebildet, z.B. mit einer entsprechenden Betätigungskontur 27f (Figur 4).

Das Sperrelement 27 ist mit zwei Lagerabschnitten 29, 29a versehen, welche hier als eine durchgehende Welle ausgebildet sind, koaxial zu der Schwenkachse 27e angeordnet sind und sich durch den Mittenabschnitt 27d erstrecken. Dabei steht auf jeder Seite des Mittenabschnitts 27d jeweils ein Lagerabschnitt 29, 29a in x-Richtung hervor.

Eine Lagerung der Lagerabschnitte 29, 29a ist hier jeweils in einer Aufnahme 16b, 16c der Mutter 16 vorgesehen. Je nach Ausführung des Federspeicherbremszylinders 100 können diese Aufnahmen 16b, 16c in dem Federspeicherkolben 8 oder in einem Druckring angeordnet sein.

Die als Welle ausgebildeten Lagerabschnitte 29, 29a sind innerhalb des Mittenabschnitts 27d mittels eines Befestigungselementes 31 mit dem Mittenabschnitt 27d axialfest verbunden. Hier ist z.B. ein Stift als Befestigungselement 31 in eine Bohrung 31a als Wellen-Naben-Verbindung zwischen dem Mittenabschnitt 27d und der als Welle ausgebildeten Lagerabschnitte 29, 29a vorgesehen. Die Bohrung 31a ist von außen zugänglich (siehe Figuren 3 und 4), so dass bei einem Einbau des Sperrelementes 27 dessen Mittenabschnitt 27d zwischen die Aufnahmen 16b, 16c platziert wird, die Wellen mit den Lagerabschnitten 29, 29a von der Seite des Betriebsbremskolbens 2 her in positiver x-Richtung eingeführt und dann durch das Befestigungselement 31 mit dem Mittenabschnitt 27d verbunden wird. Selbstverständlich sind auch andere Befestigungsarten möglich.

In Figur 3 und in **Figur 4** ist die Notlöseeinrichtung 200 in einer gesperrten Stellung gezeigt. In dieser gesperrten Stellung ist der Klinkenarm 27a des Sperrelementes 27 um die Schwenkachse 27e durch die mindestens eine am Betätigungsarm 27b angreifende Feder 30 im Uhrzeigersinn derart verschwenkt, dass der Klinkenarm 27a in der Aussparung 26 der Spindel 14 aufliegt. Dabei steht die Kontaktfläche 28 des Klinkenarms 27a mit der Abstützfläche 22a der Sperrflanke 22 in Kontakt. Das Sperrelement 27 wird durch die mindestens eine Feder 30, welche sich ortsfest am Gehäuse 1 abstützt, in der gesperrten Stellung gehalten, d.h. auf die Aussparung 26 der Spindel 14 gedrückt. Auf diese Weise ist in der gesperrten Stellung eine Verdrehung der Spindel 14 relativ zu der Mutter 16 und dem Federspeicherkolben 8 blockiert. Das durch die Kraft der Speicherfedern 9 auftretende Moment kann so auf kürzestem Weg zwischen der Spindel 14 und der Mutter 16 abgestützt werden.

Mittels eines nicht gezeigten, aber leicht vorstellbaren Betätigungsstößels kann das Sperrelement 27 in jeder Position des Federspeicherkolbens 8 gelöst werden. Dazu wird der Betätigungsstößel in z-Richtung gegen den Betätigungsarm 27b des Sperrelementes 27 bewegt, wodurch die Kraft der mindestens einen Feder 30 überwunden und das Sperrelement 27 im Gegenuhrzeigersinn (in der Darstellung in Figur 4) um die Schwenkachse 27e derart verschwenkt wird, dass die Kontaktfläche 28 des Klinkenarms 27a außer Eingriff mit der Abstützfläche 22a der Sperrflanke 22 der Spindel 14 kommt. Auf diese Weise ist die Notlöseeinrichtung 200 in die gelöste Stellung verstellt, und die Spindel 14 ist nun um die Spindelachse 14a bzw. Achse 5a relativ zu der Mutter 16 verdrehbar.

Die Gewindezugabschnitte 24, 25 des breiten Gewindezugs des Gewindes 23 bilden eine außenradiale Gleitfläche für den Klinkenarm 27a des Sperrelementes 27. Wenn der Betätigungsstößel wieder freigegeben ist, übt die mindestens eine Feder 30 auf den Betätigungsarm 27b des Sperrelementes 27 eine Kraft aus, die dem Sperrelement 27 wieder ein Moment um die Schwenkachse 27e im Uhrzeigersinn verleiht. Wenn der Klinkenarm 27a während einer Drehbewegung der Spindel 14 noch nicht wieder in der Aussparung 26 eingerastet ist, wird er durch die Feder 30 in stetiger Auflage auf die Gleitfläche der Gewindezugabschnitte 24, 25 gedrückt, bis er in die Aussparung 26 wieder einrastet und seine Kontaktfläche 28 mit der Abstützfläche 22a der Sperrflanke 22 wieder in Kontakt steht. Dieser Vorgang findet statt, wenn der Federspeicherkolben 8 aus seinem notgelösten Zustand (siehe Figur 1) wieder in seine gespannte Stellung durch Beaufschlagung der Federspeicherdruckkammer 10 mit Druckmittel verstellt wird. Danach befindet sich die Notlöseeinrichtung 200 wieder in der gesperrten Stellung.

Der Betätigungsstößel kann z.B. einen außenliegenden Griff aufweisen.

Aus Figur 3 ist zudem deutlich erkennbar, dass die Spindel 14 mit der Sperrflanke 22 auf einem sehr kleinen Einbauraum realisiert ist, ohne dass eine Gewindelänge des Außengewindes 23 der Spindel 14 reduziert werden muss.

Die Erfindung ist durch das oben angegebene Ausführungsbeispiel nicht eingeschränkt, sondern im Rahmen der Ansprüche modifizierbar.

So ist z.B. denkbar, dass der Betätigungsstößel durch eine Stelleinrichtung verstellbar ist. Eine solche Stelleinrichtung kann z.B. ein elektrischer, elektromechanischer, pneumatischer, hydraulischer Aktuator sein.

Die mindestens eine Feder 30 kann eine Druckfeder oder eine Zugfeder sein.

### Bezugszeichenliste

- 1: Gehäuse
- 2: Betriebsbremskolben
- 3: Betriebsbremsdruckkammer
- 4: Anschluss
- 5: Kolbenstange
- 5a: Achse
- 6: Rückholfeder
- 7: Nachstelleinrichtung
- 8: Federspeicherkolben
- 9: Speicherfeder
- 10: Federspeicherdruckkammer
- 11: Anschluss
- 12: Gewindespindeltrieb
- 13: Riegel
- 14: Spindel
- 14a: Spindelachse
- 15: Kunststoffbuchse
- 16: Mutter
- 16a: Innengewinde
- 16b, 16c: Aufnahme
- 16d: Nabenabschnitt
- 16e: Innenwand
- 17: Drehmomentsperre
- 18: Zahnradelement
- 19: Gleitfläche
- 20: Feder
- 21: Griff
- 22: Sperrflanke
- 22a: Abstützfläche
- 23: Außengewinde
- 23a, 23b, 23c, 23d: Gewindegang
- 24': Schmaler Gewindezug
- 24,25: Gewindezugabschnitt
- 26: Aussparung
- 27: Sperrelement
- 27a: Klinkenarm
- 27b: Betätigungsarm
- 27c: Betätigungsabschnitt
- 27d: Mittelabschnitt
- 27e: Schwenkachse
- 27f: Betätigungskontur
- 28: Kontaktfläche
- 29, 29a: Lagerabschnitt
- 30: Feder
- 31: Befestigungselement
- 31a: Bohrung

- 100, 100': Federspeicherbremszylinder
- 200,200': Notlöseeinrichtung

- x, y, z: Koordinaten

## Patentansprüche

1. Federspeicherbremszylinder (100) mit einer Notlöseeinrichtung (200), insbesondere für Schienenfahrzeuge, und mit einem innerhalb eines Gehäuses (1) axial bewegbaren Federspeicherkolben (8), der einerseits durch eine Speicherfeder (9) zum Betätigen der Bremse bei Druckabfall und andererseits durch eine druckmittelbeaufschlagbare Federspeicherdrucckammer (10) zum Lösen dieser Federspeicherbremse bewegbar ist, sowie einem im Kraftfluss zwischen dem Federspeicherkolben (8) und einer abtriebsseitigen Kolbenstange (5) angeordneten normalerweise gesperrten nichtselbsthemmenden Gewindespindeltrieb (12) mit einer Achse (5a), der über ein der Notlöseeinrichtung (200) zugeordnetes Sperrelement (27) manuell entsperrbar ist, um die Federspeicherbremse ohne Druckmittel zu lösen, wobei dem relativ zum Gehäuse (1) drehbaren Teil des Gewindespindeltriebes (12) eine außenradiale Gleitfläche für das hieran in Anlage gehaltene Sperrelement (27) zugeordnet ist, an welcher nur eine formschlüssig mit dem Sperrelement (27) zusammenwirkende Sperrflanke (22) zum Sperren der Notlöseeinrichtung (200) ausgebildet ist, wobei die Steigung des Gewindespindeltriebes (12) derart bemessen ist, dass der drehbare Teil des Gewindespindeltriebes (12) über seinen maximalen axialen Verstellhub weniger als eine ganze Umdrehung ausführt, wobei der relativ zu dem Gehäuse (1) drehbare Teil des Gewindespindeltriebs (12) als eine gemeinsam mit einer Kolbenstange (5) axial in Richtung der Achse (5a) verschiebbare Spindel (14) ausgebildet ist, die drehbar um die Kolbenstange (5) und die Achse (5a) gelagert ist, und die mit einer ortsfest zu dem Federspeicherkolben (8) angeordneten Mutter (16) als drehstarrer Teil des Gewindespindeltriebs (12) zusammenwirkt,
**dadurch gekennzeichnet, dass** die Sperrflanke (22) in ein Außengewinde (23) der Spindel (14) eingeformt ist.

2. Federspeicherbremszylinder (100) nach Anspruch 1, **dadurch gekennzeichnet, dass** die Sperrflanke (22) in das Außengewinde (23) der Spindel (14) in einem zu einem Betriebsbremskolben (2) weisenden Endbereich der Spindel (14) eingeformt ist.

3. Federspeicherbremszylinder (100) nach Anspruch 2, **dadurch gekennzeichnet, dass** die Spindel (14) mit einem mehrgängigen Außengewinde (23) versehen ist, wobei in dem zu dem Betriebsbremskolben (2) weisenden Endbereich der Spindel (14), in welchem die Sperrflanke (22) eingeformt ist, auf die Ausformung mindestens eines ersten Gewindeganges (23b) des mehrgängigen Außengewindes (23) bis zu dem Ende der Spindel (14) verzichtet ist.

4. Federspeicherbremszylinder (100) nach Anspruch 3, **dadurch gekennzeichnet, dass** in dem Bereich des nicht ausgeformten ersten Gewindeganges (23b) des mehrgängigen Außengewindes (23) ein breiter Gewindezug, welcher durch eine Aussparung (26) in zwei Gewindezugabschnitte (24, 25) getrennt ist, gebildet ist.

5. Federspeicherbremszylinder (100) nach Anspruch 1, **dadurch gekennzeichnet, dass** die Aussparung (26) an dem Gewindezugabschnitt (24) die Sperrflanke (22) mit einer Abstützfläche (22a) erzeugt.

6. Federspeicherbremszylinder (100) nach Anspruch 5, **dadurch gekennzeichnet, dass** das Sperrelement (27) der Notlöseeinrichtung (200) als Winkelhebel ausgebildet ist und um eine Schwenkachse (27e) aus einer gesperrten Stellung, in welcher das Sperrelement (27) mit der Sperrflanke (22) in Eingriff steht, in eine gelöste Stellung, in welcher das Sperrelement (27) außer Eingriff mit der Sperrflanke (22) steht, und zurück um eine Schwenkachse (27e) verschwenkbar ist.

7. Federspeicherbremszylinder (100) nach Anspruch 6, **dadurch gekennzeichnet, dass** das Sperrelement (27) der Notlöseeinrichtung (200) einen Klinkenarm (27a) mit einer Kontaktfläche (28), einen Betätigungsarm (27b) mit einem Betätigungsabschnitt (27c), einen Mittelabschnitt (27d) mit der Schwenkachse (27e) aufweist, wobei die Kontaktfläche (28) des Klinkenarms (27a) in der gesperrten Stellung der Notlöseeinrichtung (200) mit der Sperrflanke (22) in Eingriff steht.

8. Federspeicherbremszylinder (100) nach Anspruch 7, **dadurch gekennzeichnet, dass** die Schwenkachse (27e), um welche das Sperrelement (27) verschwenkbar ist, parallel zu der Achse (5a) angeordnet ist.

9. Federspeicherbremszylinder (100) nach Anspruch 8, **dadurch gekennzeichnet, dass** der Klinkenarm (27a) in der gesperrten Stellung zumindest teilweise in der Aussparung (26) der Spindel (14) aufliegt.

10. Federspeicherbremszylinder (100) nach einem der Ansprüche 7 bis 9, **dadurch gekennzeichnet, dass** die Gewindezugabschnitte (24, 25) die außenradiale Gleitfläche für den Klinkenarm (27a) des Sperrelementes (27) bilden.

11. Federspeicherbremszylinder (100) nach einem der Ansprüche 7 bis 10, **dadurch gekennzeichnet, dass** das Sperrelement (27) mittels Zusammenwirkung eines Betätigungsstößels mit dem Betätigungsarm (27b) in jeder Position des Federspeicherkolbens (8) aus der gesperrten Stellung in die gelöste Stellung verschwenkbar ist.

## Claims

1. A spring accumulator brake cylinder (100) comprising an emergency release device (200), in particular for rail vehicles, a spring accumulator piston (8) that can be moved axially within a housing (1) on one hand by a spring accumulator (9) in order to actuate the brake in the event of a drop in pressure and on the other by a spring accumulator pressure chamber (10), to which a pressure means can be applied, in order to release this spring accumulator brake, and a non-self-locking threaded spindle drive (12) that is arranged in the flux of forces between the spring accumulator piston (8) and an output side piston rod (5), is normally blocked and has an axis (5a) that can be unblocked manually by a blocking element (27) assigned to the emergency release device (200) in order to release the spring accumulator brake without a pressure means, there being assigned to the part of the threaded spindle drive (12) that is able to rotate in relation to the housing (1) an externally radial sliding surface for a blocking element (27), which is held against this sliding surface and on which is located only one blocking flank (22) that cooperates in a form fit with the blocking element (27) in order to block the emergency release device (200), the pitch of the threaded spindle drive (12) being dimensioned such that the part of the threaded spindle drive (12) that is able to rotate completes less than one full revolution over its maximum axial adjusting stroke, the part of the threaded spindle drive (12) that is able to rotate taking the form of a spindle (14) that can be moved axially in the direction of the axis (5a) together with a piston rod (5), is mounted about the piston rod (5) and the axis (5a) such that it is able to rotate and cooperates with a nut (16) that is arranged such that it is fixed in relation to the spring accumulator piston (8) as a torsionally rigid part of the threaded spindle drive (12),
**characterised in that** the blocking flank (22) is formed in an external thread (23) of the spindle (14).

2. A spring accumulator brake cylinder (100) according to claim 1, **characterised in that** the blocking flank (22) is formed in the external thread (23) of the spindle (14) in an end region of the spindle (14) facing a service brake piston (2).

3. A spring accumulator brake cylinder (100) according to claim 2, **characterised in that** the spindle (14) is provided with a multi-start external thread (23), the at least one first pitch turn (32a) formed in the multi-start external thread (23) before the end of the spindle (14) being dispensed with in the end region of the spindle (14) facing the service brake piston (2) in which the blocking flank (22) is formed.

4. A spring accumulator brake cylinder (100) according to claim 3, **characterised in that** a broad thread flight that is separated into two thread flight sections (24, 25) by a recess (26) is formed in the region of the first thread (23b) that is not formed in the multi-start external thread (23).

5. A spring accumulator brake cylinder (100) according to claim 1, **characterised in that** the recess (26) on the thread flight section (24) produces the blocking flank (22) with a supporting surface (22a).

6. A spring accumulator brake cylinder (100) according to claim 5, **characterised in that** the blocking element (27) of the emergency release device (200) is designed as an angle lever and can be pivoted about a pivot axis (27e) from a blocked position in which the blocking element (27) is engaged with the blocking flank (22) into a released position in which the blocking element (27) is disengaged from the blocking flank (22), and back.

7. A spring accumulator brake cylinder (100) according to claim 6, **characterised in that** the blocking element (27) of the emergency release device (200) has a pawl arm (27a) having a contact surface (28), an actuating arm (27b) having an actuating section (27c), a central section (27d) having the pivot axis (27e), the contact surface (28) of the pawl arm (27a) being engaged with the blocking flank (22) when the emergency release device (200) is in the blocked position.

8. A spring accumulator brake cylinder (100) according to claim 7, **characterised in that** in pivot axis (27e) about which the blocking element (27) is able to pivot is arranged parallel to the axis (5).

9. A spring accumulator brake cylinder (100) according to claim 8, **characterised in that** in the blocked position the pawl arm (27a) rests at least partially in the recess (26) of the spindle (14).

10. A spring accumulator brake cylinder (100) according to any one of claims 7 to 9, **characterised in that** the thread flight sections (24, 25) form the externally radial sliding surface for the pawl arm (27a) of the blocking element (27).

11. A spring accumulator brake cylinder (100) according to any one of claims 7 to 10, **characterised in that** the blocking element (27) is able to pivot from the blocked position to the released position by means of the cooperation of an actuating plunger with the actuating arm (27b) irrespective of the position of the spring accumulator piston.

## Revendications

1. Cylindre (100) de frein à ressort accumulateur, comprenant un dispositif (200) de desserrage d'urgence, notamment pour des véhicules ferroviaires, et comprenant un piston (8) de ressort accumulateur, qui est mobile axialement dans une enveloppe (1), qui peut être déplacé pour desserrer ce frein à ressort accumulateur d'une part par un ressort (9) accumulateur pour l'actionnement du frein s'il se produit une baisse de pression, et d'autre part, par une chambre (10) de pression à ressort accumulateur, pouvant être soumise à un fluide de pression, ainsi que un entraînement (12) à vis sans fin non autobloquant, normalement bloqué, disposé à flux de force entre le piston (8) à ressort accumulateur et une tige (5) de piston du côté mené, ayant un axe (5a) qui peut être débloqué manuellement par un élément (27) de blocage associé au dispositif (200) de desserrage d'urgence afin de desserrer le frein à ressort accumulateur sans fluide de pression, dans lequel à la partie, pouvant tourner par rapport à l'enveloppe (1), de l'entraînement (12) à vis sans fin est associée une surface de glissement radiale vers l'extérieur pour l'élément (27) de blocage, qui y est maintenu en contact, sur laquelle il n'est constitué, pour le blocage du dispositif (200) de desserrage d'urgence, qu'un flanc (22) de blocage coopérant à complémentarité de forme avec l'élément (27) de blocage, le pas de l'entraînement (12) à vis sans fin étant tel que la partie tournante de l'entraînement (12) à vis sans fin exécute, par sa course de déplacement axiale maximum, moins qu'un tour complet, dans lequel la partie, qui peut tourner par rapport à l'enveloppe (1), de l'entraînement (12) à vis sans fin est constituée sous la forme d'une broche (14) pouvant coulisser conjointement avec une tige (5) de piston axialement dans la direction de l'axe (5a), broche qui est montée tournante autour de la tige (5) du piston et de la (5a) et qui coopère avec un écrou (16), monté fixe en position par rapport au piston (8) à ressort accumulateur comme partie fixe en rotation de l'entraînement (12) de la vis sans fin
**caractérisé en ce que** le flanc (22) de blocage est formé dans un filetage (23) extérieur de la broche (14).

2. Cylindre (100) de frein à ressort accumulateur suivant la revendication 1, **caractérisé en ce que** le flanc (22) de blocage est formé dans le filetage (23) extérieur de la broche (14), dans une partie d'extrémité, tournée vers un piston (2) de frein de service, de la broche (14).

3. Cylindre (100) de frein à ressort accumulateur suivant la revendication 2, **caractérisé en ce que** la broche (14) est pourvue d'un filetage (23) extérieur à plusieurs pas, dans lequel, dans la partie d'extrémité, tournée vers le piston (2) de frein de service de la broche (14), dans laquelle le flanc (22) de blocage est formé, on renonce à la formation d'au moins un premier pas (23b) du filetage (23) extérieur à plusieurs pas jusqu'à l'extrémité de la broche (14).

4. Cylindre (100) de frein à ressort accumulateur suivant la revendication 3, **caractérisé en ce que** dans la partie du premier pas (23b) fileté non formé du filetage (23) extérieur à plusieurs pas, il est formé un trait de filetage large, qui est séparé par un évidement (26) en deux parties (24, 25).

5. Cylindre (100) de frein à ressort accumulateur suivant la revendication 1, **caractérisé en ce que** l'évidement (26) produit, sur la partie (24) de trait de filetage, le flanc (22) de blocage ayant une surface (22a) d'appui.

6. Cylindre (100) de frein à ressort accumulateur suivant la revendication 5, **caractérisé en ce que** l'élément (27) de blocage du dispositif de frein de desserrage d'urgence est constitué sous la forme d'un levier coudé et peut pivoter autour d'un axe (27e) de pivotement d'une position bloquée, dans laquelle l'élément (27) de blocage est en prise avec le flanc (22) de blocage, à une position desserrée, dans laquelle l'élément (27) de blocage est hors de prise avec le flanc (22) de blocage et peut revenir par pivotement autour d'un axe (27e) de pivotement.

7. Cylindre (100) de frein à ressort accumulateur suivant la revendication 6, **caractérisé en ce que** l'élément (27) de blocage du dispositif (200) de desserrage d'urgence a un bras (27a) de cliquet ayant une surface (28) de contact, un bras (27b) d'actionnement ayant une partie (27c) d'actionnement, une partie (27d) médiane ayant l'axe (27e) de pivotement, la surface (28) de contact du bras (27a) de cliquet étant en prise, dans la position bloquée du dispositif (200) de desserrage d'urgence, avec le flanc (22) de blocage.

8. Cylindre (100) de frein à ressort accumulateur suivant la revendication 7, **caractérisé en ce que** l'axe (27e) de pivotement, autour duquel l'élément (27) de blocage peut pivoter est parallèle à l'axe (5a).

9. Cylindre (100) de frein à ressort accumulateur suivant la revendication 8, **caractérisé en ce que** le bras (27a) de cliquet s'applique dans la position bloquée, au moins en partie, à l'évidement (26) de la broche (14).

10. Cylindre (100) de frein à ressort accumulateur suivant les revendications 7 à 9, **caractérisé en ce que** les parties (24, 25) de trait de filetage forment une surface de glissement radiale vers l'extérieur pour le bras (27a) de cliquet de l'élément (27) de blocage.

11. Cylindre (100) de frein à ressort accumulateur suivant l'une des revendications 7 à 10, **caractérisé en ce que** l'élément (27) de blocage peut, au moyen d'une coopération entre un poussoir d'actionnement avec le bras (27b) d'actionnement, pivoter, en toute position du piston (8) à ressort accumulateur, de la position bloquée à la position desserrée.
